# FASCICULE DE BREVET EUROPEEN

(11) **EP 1 707 870 B1**
(45) Date de publication et mention de la délivrance du brevet: **12.12.2007**
(21) Numéro de dépôt: 05077658.2
(22) Date de dépôt: 23.11.2005
(51) Int. Cl.: F21S 9/03

(54) **Abri d'attente pour voyageurs avec dispositif de commande de l'éclairage**
Luftschutzraum für Reisende mit Steuereinheit für die Beleuchtung
Shelter for passengers with lighting unit command

(30) Priorité: 30.03.2005 FR 0503099
(43) Date de publication de la demande: 04.10.2006
(73) Titulaire: JCDecaux SA, 92200 Neuilly-Sur-Seine (FR)
(72) Inventeur: Le Gars, Jacques, 78950 Gambais (FR)
(74) Mandataire: Burbaud, Eric

(56) Documents cités:
- WO-A-02/081844
- DE-U1- 9 315 434
- US-A- 4 410 930
- US-A- 5 927 026

## Description

La présente invention est relative aux abris d'attente pour voyageurs, du type de ceux dénommés "Abribus"®.

Plus particulièrement, l'invention concerne un abri d'attente pour voyageurs comprenant un toit sous lequel est disposée une pluralité de points lumineux électriques commandés par un dispositif de commande.

Le document US-A-5 107 637 décrit un exemple d'un tel abri.

Dans les abris connus de ce type, l'éclairage est soit éteint, soit allumé à puissance maximale en fonction de l'heure. Il en résulte une consommation électrique relativement importante qui est inutile une grande partie du temps, lorsque l'abri ne reçoit aucun voyageur.

Le document WO-A-02081844 décrit un abri avec une pluralité de détecteurs de présence et avec une dispositif de commande.

La présente invention a notamment pour but de pallier ces inconvénients.

A cet effet, selon l'invention, un abri du genre en question est caractérisé en ce qu'il comporte une pluralité de détecteurs de présence adaptés pour détecter un voyageur sous l'abri, le dispositif de commande étant relié aux détecteurs et étant adapté pour sélectivement commander au moins certains desdits points lumineux en fonction de la détection ou non d'un voyageur par les détecteurs en correspondance avec lesdits points lumineux.

Grâce à ces dispositions, on peut limiter fortement la consommation d'énergie de l'éclairage de l'abri, notamment en permettant d'établir un régime de veille à faible éclairage, voire sans éclairage, tant qu'aucun voyageur n'est détecté.

Dans divers modes de réalisation de l'abri selon l'invention, on peut éventuellement avoir recours en outre à l'une et/ou à l'autre des dispositions suivantes :
- chaque détecteur est associé à au moins un point lumineux et le dispositif de commande est adapté pour allumer ledit point lumineux, en période nocturne, lorsque ledit détecteur détecte un voyageur ;
- chaque détecteur est associé à un point lumineux unique ;
- chaque détecteur est disposé sous le toit de l'abri au voisinage dudit au moins un point lumineux auquel il est associé ;
- le toit de l'abri présente une face inférieure comprenant une pluralité de plaques modulaires juxtaposées qui comportent chacune un point lumineux et un détecteur ;
- le dispositif de commande est adapté pour, lorsqu'un détecteur détecte un voyageur sous l'abri, allumer uniquement le ou les points lumineux disposés en correspondance avec le voyageur, en période nocturne ;
- le dispositif de commande est adapté pour faire fonctionner les points lumineux selon un mode de veille à faible consommation lorsque aucun détecteur ne détecte de voyageur sous l'abri, en période nocturne ;
- le dispositif de commande est adapté pour éteindre tous les points lumineux en mode de veille ;
- le dispositif de commande est adapté pour allumer au moins certains points lumineux à basse puissance en mode de veille ;
- le dispositif de commande est adapté pour allumer uniquement certains points lumineux en mode de veille ;
- le dispositif de commande est adapté pour allumer tour à tour au moins certains des points lumineux en mode de veille ;
- les détecteurs sont adaptés pour détecter une présence sous l'abri à partir d'une hauteur minimale comprise entre 30 et 120 cm au dessus du sol ;
- l'abri comporte un panneau d'affichage éclairé et le dispositif de commande est adapté pour faire fonctionner les points lumineux voisins du panneau d'affichage avec une puissance inférieure aux autres points lumineux ;
- le dispositif de commande est adapté pour détecter des dispositifs d'identification portatifs portés par certains voyageurs et pour faire fonctionner les points lumineux d'une façon spécifique lorsqu'un tel dispositif d'identification portatif est détecté ;
- le dispositif de commande est adapté pour augmenter le niveau d'éclairage sous l'abri lorsqu'il détecte ledit dispositif d'identification portatif ;
- l'abri comporte un dispositif d'alimentation électrique photovoltaïque.

D'autres caractéristiques et avantages de l'invention apparaîtront au cours de la description suivante d'un de ses modes de réalisation, donné à titre d'exemple non limitatif, en regard des dessins joints.

Sur les dessins :
- la figure 1 est une vue en perspective montrant un abri pour voyageurs selon une forme de réalisation de l'invention,
- la figure 2 est une vue de détail de la face inférieure de l'abri de la figure 1,
- la figure 3 est une vue de dessus du toit de l'abri de la figure 1,
- et la figure 4 est un schéma bloc montrant le système de commande de l'éclairage de l'abri de la figure 1.

Sur les différentes figures, les mêmes références désignent des éléments identiques ou similaires.

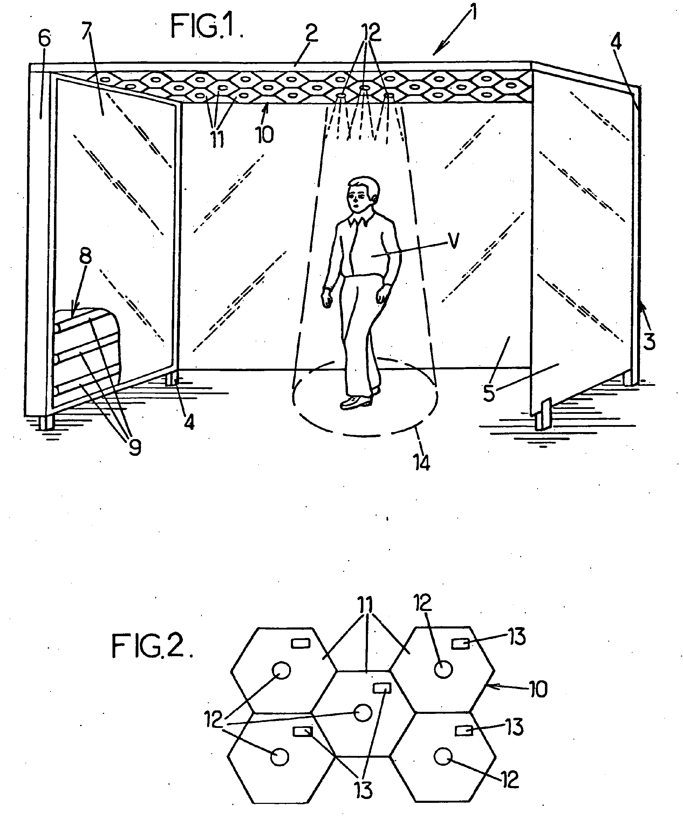

La figure 1 représente un abri d'attente pour voyageurs de transports en commun 1 du type de ceux dénommés "abri bus"®. L'abri 1 comporte un toit 2 supporté par une structure 3 qui peut comprendre par exemple des poteaux 4, des parois latérales 5 vitrées ou autres et le cas échéant un panneau d'affichage 6 lumineux.

Le panneau d'affichage 6 peut comporter par exemple au moins une face transparente 7 adaptée pour recevoir une affiche rétro éclairée par un dispositif d'éclairage 8 qui comporte par exemple plusieurs tubes néon 9.

La face inférieure 10 du toit 2 comporte une pluralité de plaques modulaires 11 juxtaposées qui dans l'exemple considéré ici sont de forme hexagonale et peuvent présenter chacune une surface de l'ordre de 0,25 m².

Comme représenté sur les figures 1 et 2, chacune des plaques modulaires 11 peut comporter un point d'éclairage 12 adapté pour éclairer vers le bas, de préférence avec un éclairage directif. Les points d'éclairage 12 peuvent être formés par exemple par des diodes électroluminescentes de couleur blanche, ou autre.

De plus, chacune des plaques modulaires 11 peut comporter un détecteur de présence 13, par exemple un détecteur de mouvements à infrarouge, qui est orienté vers le bas et qui est de préférence lui-même assez directif, de façon à détecter un voyageur V présent sous l'abri 1, uniquement si ce voyageur se trouve en correspondance avec le détecteur en question.

Les détecteurs 13 peuvent être adaptés pour détecter une présence à partir d'une hauteur minimale au dessus du sol, cette hauteur minimale pouvant être par exemple comprise entre 30 cm et 120 cm : ainsi les détecteurs 13 peuvent détecter la présence d'un enfant ou d'un adulte, mais ne détectent pas la présence d'un animal tel qu'un chien de relativement petite taille ou un chat. Cette hauteur minimale de détection peut être obtenue par exemple en calibrant la sensibilité des détecteurs 13.

En variante, les détecteurs 13 pourraient détecter une présence sous l'abri 1 sans hauteur minimale de détection, et l'abri 1 pourrait comporter un détecteur de présence supplémentaire (non représenté), orienté horizontalement et détectant tout mouvement à l'intérieur de l'abri 1 à partir d'une certaine hauteur minimale : dans ce cas, les détecteurs 13 disposés sous le toit de l'abri détecteraient uniquement la position d'une personne ou d'un animal présent sous l'abri, tandis que le détecteur orienté horizontalement vérifierait que la présence détectée est une présence humaine, en vérifiant que l'on détecte une présence à une hauteur suffisante au dessus du sol pour qu'il ne s'agisse pas d'un animal de petite taille tel qu'un chien ou un chat.

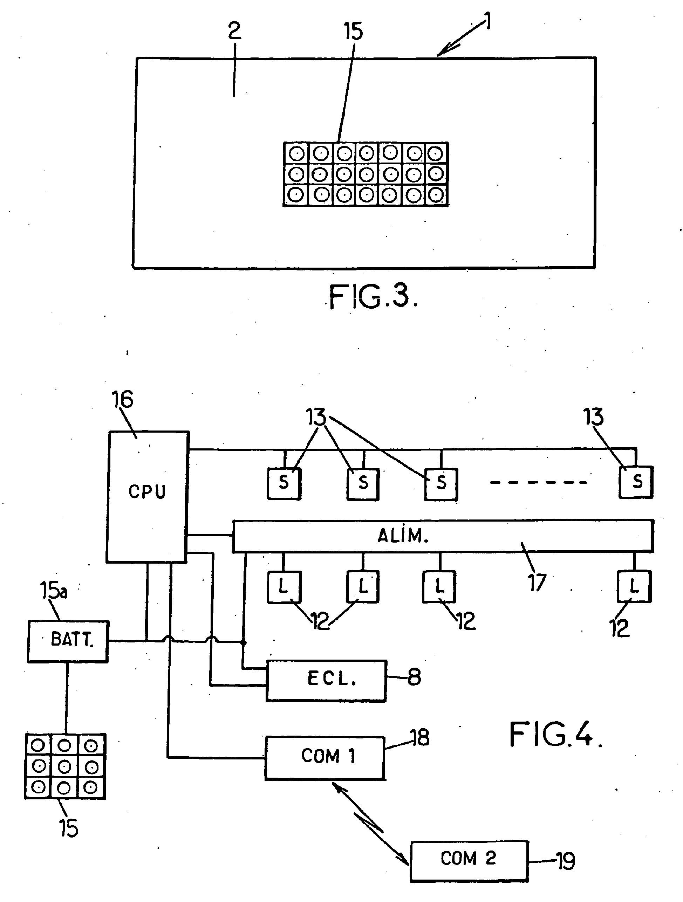

Comme représenté sur la figure 3, l'ensemble des dispositifs électriques de l'abri 1 peut être alimenté électriquement par un dispositif d'alimentation photovoltaïque 15 disposé sur le toit 2 de l'abri et associé à une batterie 15a (figure 4).

Comme représenté sur la figure 4, la batterie 15a peut alimenter le dispositif d'éclairage 8 du panneau 6, un dispositif de commande 16 tel qu'une unité centrale électronique (CPU) et un circuit d'alimentation électrique 17 qui est commandé par l'unité centrale 16 pour commander le fonctionnement des points lumineux 12 (L) ainsi que le niveau de puissance électrique délivré à chaque point lumineux 12.

Les différents détecteurs de présence 13 (S) sont également reliés à l'unité centrale électronique 16, et ladite unité centrale électronique commande en outre le dispositif d'éclairage 8 du panneau 6. Eventuellement, l'unité centrale électronique 16 peut être reliée à une interface de communication 18 (COM1), par exemple une interface radio, qui est adaptée pour détecter la présence sous l'abri d'un dispositif d'identification portatif 19 (COM2) porté par exemple par des malvoyants.

Le dispositif qui vient d'être décrit fonctionne comme suit :
- lorsqu'un détecteur 13 détecte un voyageur sous l'abri en période nocturne (il peut s'agir par exemple d'une tranche horaire prédéterminée mémorisée par l'unité centrale électronique 16, qui inclut classiquement une horloge électronique, ou d'une tranche horaire de fonctionnement de l'éclairage public, auquel l'abri peut être raccordé), l'unité centrale électronique 16 allume uniquement le ou les points lumineux disposés en correspondance avec le voyageur V (ou avec les voyageurs si plusieurs voyageurs sont repérés) ; si le ou les voyageurs V se déplacent sous l'abri, la zone éclairée 14 (figure 1) se déplace avec eux ;
- lorsque aucun détecteur 13 ne détecte de voyageur V sous l'abri, en période nocturne, l'unité centrale 16 est adaptée pour faire fonctionner les points lumineux selon un mode de veille à faible consommation.

Dans ce mode de veille, l'unité centrale 16 peut être adaptée pour :
- soit éteindre tous les points lumineux 12,
- soit allumer au moins certains points lumineux 12 à basse puissance, et/ou allumer uniquement certains points lumineux 12 et/ou allumer tour à tour au moins certains des points lumineux 12.

On notera par ailleurs que l'on peut faire fonctionner les points lumineux voisins du panneau d'affichage avec une puissance inférieure aux autres points lumineux, pour tenir compte de l'apport de lumière procuré par le panneau d'affichage 6.

Par ailleurs, lorsque l'unité centrale 16 détecte un dispositif d'identification portatif 19 sous l'abri 1, elle peut être adaptée pour faire fonctionner les points lumineux 12 d'une façon spécifique, par exemple en augmentant le niveau d'éclairage sous l'abri.

On notera enfin que les détecteurs 13 pourraient éventuellement être en nombre inférieur par rapport aux points lumineux 12, auquel cas plusieurs points lumineux 12 seraient affectés à un détecteur 13. De même, les points lumineux 12 et détecteurs 13 pourraient être installés sous le toit 2 autrement que sur les plaques modulaires 11 décrites ci-dessous.

## Revendications

1. Abri d'attente pour voyageurs comprenant un toit (2) sous lequel est disposée une pluralité de points lumineux électriques (12) commandés par un dispositif de commande (16) et
comportant une pluralité de détecteurs de présence (13) adaptés pour détecter un voyageur (V) sous l'abri, **caracérisé en ce que** le dispositif de commande (16) est relié aux détecteurs (13) et est adapté pour sélectivement commander certains desdits point lumineux (12) en fonction de la détection ou non d'un voyageur (V) par les détecteurs (13) en correspondance avec lesdits points lumineux.

2. Abri selon la revendication 1, dans lequel chaque détecteur (13) est associé à au moins un point lumineux (12) et le dispositif de commande est adapté pour allumer ledit point lumineux (12), en période nocturne, lorsque ledit détecteur détecte un voyageur ;

3. Abri selon la revendication 2, dans lequel chaque détecteur (13) est associé à un point lumineux (12) unique.

4. Abri selon la revendication 2 ou la revendication 3, dans lequel chaque détecteur (13) est disposé sous le toit (2) de l'abri au voisinage dudit au moins un point lumineux (12) auquel il est associé.

5. Abri selon la revendication 4, dans lequel le toit (2) de l'abri présente une face inférieure (10) comprenant une pluralité de plaques modulaires (11) juxtaposées qui comportent chacune un point lumineux (12) et un détecteur (13).

6. Abri selon l'une quelconque des revendications précédentes, dans lequel le dispositif de commande (16) est adapté pour, lorsqu'un détecteur (13) détecte un voyageur (V) sous l'abri, allumer uniquement le ou les points lumineux (12) disposés en correspondance avec le voyageur (V), en période nocturne.

7. Abri selon l'une quelconque des revendications précédentes, dans lequel le dispositif de commande (16) est adapté pour faire fonctionner les points lumineux (12) selon un mode de veille à faible consommation lorsque aucun détecteur (13) ne détecte de voyageur (V) sous l'abri, en période nocturne.

8. Abri selon la revendication 7, dans lequel le dispositif de commande (16) est adapté pour éteindre tous les points lumineux (12) en mode de veille.

9. Abri selon la revendication 7, dans lequel le dispositif de commande (16) est adapté pour allumer au moins certains points lumineux (12) à basse puissance en mode de veille.

10. Abri selon la revendication 7, dans lequel le dispositif de commande (16) est adapté pour allumer uniquement certains points lumineux (12) en mode de veille.

11. Abri selon la revendication 7, dans lequel le dispositif de commande (16) est adapté pour allumer tour à tour au moins certains des points lumineux (12) en mode de veille.

12. Abri selon l'une quelconque des revendications précédentes, dans lequel les détecteurs (13) sont adaptés pour détecter une présence sous l'abri à partir d'une hauteur minimale comprise entre 30 et 120 cm au dessus du sol.

13. Abri selon l'une quelconque des revendications précédentes, comportant un panneau d'affichage éclairé (6), le dispositif de commande (16) étant adapté pour faire fonctionner les points lumineux (12) voisins du panneau d'affichage (6) avec une puissance inférieure aux autres points lumineux (12).

14. Abri selon l'une quelconque des revendications précédentes, dans lequel le dispositif de commande (16) est adapté pour détecter des dispositifs d'identification portatifs (19) portés par certains voyageurs et pour faire fonctionner les points lumineux (12) d'une façon spécifique lorsqu'un tel dispositif d'identification portatif (19) est détecté.

15. Abri selon la revendication 14, dans lequel le dispositif de commande (16) est adapté pour augmenter le niveau d'éclairage sous l'abri (1) lorsqu'il détecte ledit dispositif d'identification portatif (19).

16. Abri selon l'une quelconque des revendications précédentes, comportant un dispositif d'alimentation électrique photovoltaïque (15).

## Claims

1. Waiting-shelter for passengers, comprising a roof (2) beneath which there are disposed a plurality of electric light-spots (12) which are controlled by a control device (16), and comprising a plurality of presence detectors (13) designed for detecting a passenger (V) beneath the shelter, **characterized in that** the control device (16) is connected to the detectors (13) and is designed for selectively controlling some of said light-spots (12) according to the detection or otherwise of a passenger (V) by the detectors (13) in correspondence with said light-spots.

2. Shelter according to Claim 1, wherein each detector (13) is associated with at least one light-spot (12) and the control device is designed for illuminating said light-spot (12), at night, when said detector detects a passenger.

3. Shelter according to Claim 2, wherein each detector (13) is associated with a single light-spot (12).

4. Shelter according to either of Claims 2 or 3, wherein each detector (13) is disposed beneath the roof (2) of the shelter, close to said at least one light-spot (12) with which it is associated.

5. Shelter according to Claim 4, wherein the roof (2) of the shelter has a lower face (10) comprising a plurality of juxtaposed modular panels (11), each of which comprises a light-spot (12) and a detector (13).

6. Shelter according to any one of the preceding claims, wherein the control device (16) is designed for illuminating, at night, when a detector (13) detects a passenger (V) beneath the shelter, solely the light-spot (12) or light-spots (12) disposed in correspondence with the passenger (V).

7. Shelter according to any one of the preceding claims, wherein the control device (16) is designed for operating the light-spots (12) in a low-consumption standby mode when none of the detectors (13) detects a passenger (V) beneath the shelter, at night.

8. Shelter according to Claim 7, wherein the control device (16) is designed for extinguishing all the light-spots (12) in standby mode.

9. Shelter according to Claim 7, wherein the control device (16) is designed for illuminating at least some light-spots (12) with low power in standby mode.

10. Shelter according to Claim 7, wherein the control device (16) is designed for illuminating solely some light-spots (12) in standby mode.

11. Shelter according to Claim 7, wherein the control device (16) is designed for illuminating in turn at least some of the light-spots (12) in standby mode.

12. Shelter according to any one of the preceding claims, wherein the detectors (13) are designed for detecting a presence beneath the shelter on the basis of a minimum height of between 30 and 120 cm above the ground.

13. Shelter according to any one of the preceding claims, comprising an illuminated display panel (6), the control device (16) being designed for operating the light-spots (12) close to the display panel (6) with a power which is less than that of the other light-spots (12).

14. Shelter according to any one of the preceding claims, wherein the control device (16) is designed for detecting portable identification devices (19) carried by certain passengers, and for operating the light-spots (12) in a specific manner when such a portable identification device (19) is detected.

15. Shelter according to Claim 14, wherein the control device (16) is designed for increasing the level of lighting beneath the shelter (1) when it detects said portable identification device (19).

16. Shelter according to any one of the preceding claims, comprising a photovoltaic electric power-supply device (15).

## Patentansprüche

1. Warteunterstand für Fahrgäste, der ein Dach (2) umfasst, unter dem eine Vielzahl von elektrischen Lichtpunkten (12) angeordnet sind, die von einer Steuervorrichtung (16) gesteuert sind, und
der eine Vielzahl von Präsenzdetektoren (13) aufweist, die zum Erfassen eines Fahrgasts (V) unter dem Unterstand eingerichtet sind, **dadurch gekennzeichnet, dass** die Steuervorrichtung (16) mit den Detektoren (13) verbunden ist und zum selektiven Steuern von bestimmten der Lichtpunkte (12) in Abhängigkeit von der Erfassung oder Nichterfassung eines Fahrgasts (V) durch die Detektoren (13) entsprechend den Lichtpunkten ausgebildet ist.

2. Unterstand nach Anspruch 1, wobei jedem Detektor (13) mindestens ein Lichtpunkt (12) zugeordnet ist und die Steuervorrichtung eingerichtet ist, den Lichtpunkt (12) zur Nachtzeit einzuschalten, wenn der Detektor einen Fahrgast erfasst.

3. Unterstand nach Anspruch 2, wobei jedem Detektor (13) ein einziger Lichtpunkt (12) zugeordnet ist.

4. Unterstand nach Anspruch 2 oder Anspruch 3, wobei jeder Detektor (13) unter dem Dach (2) des Unterstands benachbart zu dem mindestens einen, ihm zugeordneten Lichtpunkt (12) angeordnet ist.

5. Unterstand nach Anspruch 4, wobei das Dach (2) des Unterstands eine Unterseite (10) mit einer Vielzahl von nebeneinander angeordneten Modularplatten (11) besitzt, die jeweils einen Lichtpunkt (12) und einen Detektor (13) aufweisen.

6. Unterstand nach irgendeinem der vorangehenden Ansprüche, wobei die Steuervorrichtung (16) eingerichtet ist, dann wenn ein Detektor (13) einen Fahrgast (V) unter dem Unterstand erfasst, nur den oder die Lichtpunkte (12) zur Nachtzeit einzuschalten, die entsprechend dem Fahrgast (V) angeordnet sind.

7. Unterstand nach irgendeinem der vorangehenden Ansprüche, wobei die Steuervorrichtung (16) eingerichtet ist, die Lichtpunkte (12) zur Nachtzeit gemäß einem Niedrigverbrauch-Ruhemodus zu betreiben, wenn kein Detektor (13) einen Fahrgast (V) unter dem Unterstand erfasst.

8. Unterstand nach Anspruch 7, wobei die Steuervorrichtung (16) eingerichtet ist, alle Lichtpunkte (12) im Ruhemodus auszuschalten.

9. Unterstand nach Anspruch 7, wobei die Steuervorrichtung (16) eingerichtet ist, wenigstens bestimmte Lichtpunkte (12) mit niedriger Leistung im Ruhemodus einzuschalten.

10. Unterstand nach Anspruch 7, wobei die Steuervorrichtung (16) eingerichtet ist, nur bestimmte Lichtpunkte (12) im Ruhemodus einzuschalten.

11. Unterstand nach Anspruch 7, wobei die Steuervorrichtung (16) eingerichtet ist, abwechselnd zumindest bestimmte der Lichtpunkte (12) im Ruhemodus einzuschalten.

12. Unterstand nach irgendeinem der vorangehenden Ansprüche, wobei die Detektoren (13) eingerichtet sind, eine Präsenz unter dem Unterstand ab einer Mindesthöhe von zwischen 30 und 120 cm über dem Boden zu erfassen.

13. Unterstand nach irgendeinem der vorangehenden Ansprüche, der eine beleuchtete Anschlagtafel (6) aufweist, wobei die Steuervorrichtung (16) eingerichtet ist, die zur Anschlagtafel (6) benachbarten Lichtpunkte (12) mit einer niedrigeren Leistung zu betreiben als die übrigen Lichtpunkte (12).

14. Unterstand nach irgendeinem der vorangehenden Ansprüche, wobei die Steuervorrichtung (16) eingerichtet ist, tragbare Identifizierungsvorrichtungen (19) zu erfassen, die von bestimmten Fahrgästen getragen werden, und die Lichtpunkte (12) auf spezielle Weise zu betreiben, wenn eine derartige tragbare Identifizierungsvorrichtung (19) erfasst wird.

15. Unterstand nach Anspruch 14, wobei die Steuervorrichtung (16) eingerichtet ist, die Beleuchtungsstärke unter dem Unterstand (1) zu erhöhen, wenn sie die tragbare Identifizierungsvorrichtung (19) erfasst.

16. Unterstand nach irgendeinem der vorangehenden Ansprüche, der eine photovoltaische Energieversorgungsvorrichtung (15) aufweist.
